(19) **Europäisches Patentamt**
**European Patent Office**
**Office européen des brevets**

(11) **EP 2 845 868 A1**

(12) **EUROPEAN PATENT APPLICATION**

(43) Date of publication:
**11.03.2015 Bulletin 2015/11**

(51) Int Cl.:
***C08F 10/00*** (2006.01)          ***C08F 4/651*** (2006.01)
***C08F 4/655*** (2006.01)

(21) Application number: **14004083.3**

(22) Date of filing: **31.05.2006**

(84) Designated Contracting States:
**AT BE BG CH CY CZ DE DK EE ES FI FR GB GR HU IE IS IT LI LT LU LV MC NL PL PT RO SE SI SK TR**

(62) Document number(s) of the earlier application(s) in accordance with Art. 76 EPC:
**06011309.9 / 1 862 480**

(71) Applicant: **Borealis Technology Oy**
**06101 Porvoo (FI)**

(72) Inventors:
• **Denifl, Peter**
**6156 Gries am Brenner (AT)**

• **Leinonen, Timo**
**06750 Tolkkinen (FI)**

(74) Representative: **Grünecker, Kinkeldey, Stockmair & Schwanhäusser Anwaltssozietät**
**Leopoldstrasse 4**
**80802 München (DE)**

Remarks:
This application was filed on 03-12-2014 as a divisional application to the application mentioned under INID code 62.

(54) **Oxidation state of Ti as means for increasing catalyst activity**

(57)     The invention refers to a process for preparing an olefin polymerization catalyst component, in particular an olefin polymerization catalyst component in particulate form having an improved high temperature activity and the use thereof in a process for polymerizing olefins.

EP 2 845 868 A1

**Description**

The invention relates to a method of controlling the high temperature polymerisation activity of a Ziegler-Natta catalyst, to a process for preparing a particulate olefin polymerisation catalyst component, and to a catalyst component. The invention also relates to the use of such a catalyst component for preparing a catalyst, the activity maximum of which is shifted to a higher temperature, used in the polymerisation of olefins.

**Background of the invention**

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.

Various methods for preparing ZN catalysts are known in the state of art. In one known method, a supported ZN catalyst system is prepared by impregnating the catalyst components on a particulate support material. In WO-A-01 55 230, the catalyst component(s) are supported on a porous, inorganic or organic particulate carrier material, such as silica.

In a further well known method the carrier material is based on one of the catalyst components, e.g. on a magnesium compound, such as $MgCl_2$. This type of carrier material can also be formed in various ways. EP-A-713 886 of Japan Olefins describes the formation of $MgCl_2$ adduct with an alcohol which is then emulsified and finally the resultant mixture is quenched to cause the solidification of the droplets.

Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst.

Accordingly, in case of external carriers, some examples of which are disclosed above, the morphology of the carrier is one of the defining factors for the morphology of the final catalyst.

One disadvantage encountered with the supported catalyst systems is that a possible surface treatment (impregnation step) of the support with one or more catalytically active compounds may lead to non-uniform distribution of the active component(s) and in turn to an inhomogeneous polymer material.

WO-A-00 08073 and WO-A-00 08074 describe further methods for producing a solid ZN-catalyst, wherein a solution of a Mg-based compound and one or more further catalyst compounds are formed and the reaction product thereof is precipitated out of the solution by heating the system. Furthermore, EP-A-926 165 discloses another precipitating method, wherein a mixture of $MgCl_2$ and Mg-alkoxide is precipitated together with a Ti-compound to give a ZN catalyst.

EP-A-83 074 and EP-A-83 073 of Montedison disclose methods for producing a ZN catalyst or a precursor thereof, wherein an emulsion or dispersion of Mg and/or Ti compound is formed in an inert liquid medium or inert gas phase and said system is reacted with an Al-alkyl compound to precipitate a solid catalyst. According to examples said emulsion is then added to a larger volume of Al-compound in hexane and prepolymerised to cause the precipitation.

In general, a drawback of such precipitation methods is the difficulty to control the precipitation step and thus the morphology of the precipitating catalyst particles.

Furthermore, the precipitation of the catalyst component(s) may often proceed via a "tar-like" intermediate stage. Said undesired sticky precipitate agglomerates easily and sticks to the walls of the reactor. The morphology of the catalyst would then of course be lost.

WO 03/000757 and WO 2004/029112 describe processes for preparing olefin polymerisation catalyst components.

It is also known for some ZN-catalysts known in the art that the catalysts have their activity maximum at a relatively low temperature leading to a decreased or even drastically decreased catalyst activity, if polymerisation is desired to carry out at higher temperature.

Accordingly, although much development work has been done in the field of Ziegler-Natta catalysts, there remains a need for alternative or improved methods of producing ZN catalysts with desirable properties.

The present invention accordingly aims at enabling the control of the polymerisation activity of a Ziegler-Natta catalyst, so that a high polymerisation activity is enabled at high polymerisation temperatures. The present invention furthermore aims at providing such a catalyst and/or a catalyst component enabling the preparation of a final Ziegler-Natta olefin polymerisation catalyst having such improved properties, as identified above, as well as suitable methods of preparing such catalyst and/or catalyst components.

It is of particular interest to obtain a catalyst in particulate form which results in good and desired polymer properties also when used in polymerisation processes, where higher temperature are used. I.e. the catalyst activity maximum is shifted to a higher temperature.

**Brief description of the invention**

In order to solve the above-identified objects, the present invention provides a process for preparing an olefin polymerisation catalyst component as defined in claim 1. Preferred embodiments are identified in the dependent subclaims as well as in the following description. Finally, the present invention also provides an olefin polymerisation catalyst component, an olefin polymerisation catalyst as well as the use thereof for the polymerisation of olefins, as identified in claims 6 to 8 as well as the following specification.

In particular, the present invention is concerned with the following embodiments:

1.Process for increasing the catalytic activity of an olefin polymerisation catalyst component at higher temperatures, comprising the steps of:

a) preparing a solution of a complex of a group 2 metal and an electron donor by reacting a compound of said metal with said electron donor or a precursor thereof and an organic liquid reaction medium;
b) adding said solution of said complex to at least one titanium compound comprising titanium in the oxidation state of +4, to produce an emulsion the dispersed phase of which contains more than 50 mol% of the group 2 metal in said complex;
c) agitating the emulsion in order to maintain the droplets of said dispersed phase within such an average size range of from 5 to 200 $\mu$m;
d) solidifying said droplets of the dispersed phase; and
e) recovering the solidified particles of the olefin polymerisation catalyst component;

wherein the increase in activity is achieved by decreasing the amount of titanium present in said solidified particles of the olefin polymerisation catalyst component being present in the oxidation state of +4 by adding a reducing agent.

2. Process in accordance with embodiment 1, wherein the increase in catalytic activity is represented by an increased activity at 80°C compared to the activity at 70°C.

3. Process in accordance with any one of embodiments 1 or 2, wherein the reducing agent employed is added to the reaction mixture at any stage from during step c) to prior to step e).

4. Process in accordance with any one of the preceding embodiments, wherein the reducing agent is selected among aluminium compounds and magnesium compounds.

5. Process in accordance with embodiment 4, wherein the aluminium compound is an aluminium alkyl compound or an aluminium alkoxy compound and wherein the magnesium compound is an alkyl magnesium compound.

6. Process for preparing an olefin polymerisation catalyst component in the form of particles having a predetermined size range of 5 to 200 $\mu$m, said process comprising the steps of:

a) preparing a solution of a complex of a group 2 metal and an electron donor by reacting a compound of said metal with said electron donor or a precursor thereof in an organic liquid reaction medium;
b) adding said solution of said complex to at least one titanium compound to produce an emulsion the dispersed phase of which contains more than 50 mol% of the group 2 metal in said complex;
c) agitating the emulsion in order to maintain the droplets of said dispersed phase within such an average size range of 5 to 200 $\mu$m;
d) solidifying said droplets of the dispersed phase;
e) recovering the solidified particles of the olefin polymerisation catalyst component;

wherein an aluminium alkoxy compound or a magnesium compound is added to and brought into contact with the droplets of the dispersed phase of the agitated emulsion before recovering the solidified particles in step e).

7. Process in accordance with embodiment 6, wherein a magnesium compound is added to and brought into contact with the droplets of the dispersed phase of the agitated emulsion before recovering the solidified particles in step e).

8. Process in accordance with embodiments 6 or 7, wherein the solidified particles of the olefin polymerisation catalyst component comprise 6 wt% or less of titanium and/or 10 wt% or more of a group 2 metal.

9. Process in accordance with any one of embodiments 6, 7 or 8, wherein the magnesium compound is an alkyl magnesium compound or halogenated alkyl magnesium compound of the general formula $MgR_{2-n}X_n$, where each n is 0 or 1, and each R are same or different alkyl groups with 1 to 8 carbon atoms and X is halogen, preferably Cl, preferably the magnesium compound is butyloctyl magnesium.

10. Process in accordance with any one of embodiments 6 to 9, wherein the solidified particles of the olefin polymerisation catalyst component comprise less than 80 % of the total titanium content in the form of titanium in the oxidation state of +4, preferably less than 70%, more preferably less than 60%.

11. Solidified particles of an olefin polymerisation catalyst component, obtainable by any one of the processes as claimed in embodiments 6 to 10.

12. An olefin polymerisation catalyst comprising particles of the catalyst component obtainable according to the process of any of embodiments 6 to 10 and a cocatalyst, preferably an alkylaluminium cocatalyst and optionally an external electron donor.

13. Use of a catalyst in accordance with embodiment 12 in a process for polymerising olefins, in particular $C_2$ to $C_{10}$ $\alpha$-olefins, preferably propylene or ethylene or copolymers thereof with other $\alpha$-olefins.

**Detailed description of the invention**

The inventors, after laborious studies, surprisingly determined that the polymerisation activity of a Ziegler-Natta catalyst component comprising as transition metal titanium, can be increased at a higher temperatures, and in particular that the maximum of the polymerisation activity can be shifted to higher temperatures, by reducing the amount of titanium present in the catalyst component in the oxidation state +4.

Accordingly, the present invention provides a method of increasing the catalytic activity of a Ziegler-Natta catalyst component comprising titanium by decreasing the amount of titanium present in the oxidation state of +4 in a controlled manner. By reducing, in a controlled way, the titanium present in the oxidation state +4 to titanium in the oxidation states $Ti^{3+}$ and $Ti^{2+}$, thus decreasing the amount of $Ti^{4+}$, the polymerisation activity at high temperatures can be increased and, in particular, the maximum of the polymerisation activity can be shifted to higher temperatures, compared with a Ziegler-Natta catalyst component of identical composition with the only difference being a higher amount of titanium present in oxidation state +4.

Based on this surprising finding, the present invention, in embodiments, provides a method for increasing the catalytic activity as defined in the claims and as further exemplified below.

In addition, the present invention also provides a process for preparing an olefin polymerisation catalyst component having such increased catalytic activity with respect to polymerisations carried out at higher temperatures, using the emulsion/solidification technology known from the prior art cited above but using as agents for controlling the oxidation state of the transition metal component titanium either an aluminium alkoxy compound or a magnesium compound, as defined further herein.

**Detailed description of the method for controlling the polymerisation activity ("control embodiment")**

As already outlined above, the present invention enables to increase the polymerisation activity of a Ziegler-Natta catalyst at higher temperatures by controlling the amount of titanium present in the Ziegler-Natta catalyst in the oxidation state +4. Since the relevance of the oxidation state of the titanium has been established by the inventors of the present invention, it is possible to control the polymerisation activity in a reliable manner, in particular by adding reducing agents to a Ziegler-Natta catalyst component to be employed in a Ziegler-Natta catalyst system, thereby controlling the oxidation state of titanium contained.

The present invention accordingly provides a method for controlling the catalytic activity of an olefin polymerisation catalyst component at higher temperatures, said method comprising the steps of:

a) preparing a solution of a complex of a Group 2 metal and an electron donor by reacting a compound of said metal with said electron donor or a precursor thereof in an organic liquid reaction medium;

b) adding said solution of said complex to at least one titanium compound comprising titanium in the oxidation state +4, to produce an emulsion the dispersed phase of which contains more than 50 mol% of the Group 2 metal in said complex;

c) agitating the emulsion in order to maintain the droplets of said dispersed phase within an average size range of 5 to 200µm;

d) solidifying said droplets of the dispersed phase;

e) recovering the solidified particles of the olefin polymerisation catalyst component;

wherein the control of catalytic activity is achieved by decreasing the amount of titanium present in said solidified particles of the olefin polymerisation catalyst component being present in the oxidation state +4 by adding a reducing agent before recovering the solidified particles in step e).

Examples of reducing agents to be employed in accordance with this aspect of the present invention are aluminium alkyl compounds, aluminium alkoxy compounds as well as magnesium compounds as defined in the present specification. The aluminium alkyl compounds which are suitable in accordance with the present invention are defined further below in connection with the description of the "control embodiment" of the present invention, while the aluminium alkoxy compounds and the magnesium compounds which are suitable for this aspect of the present invention are described further below in connection with the process for preparing an olefin polymerisation catalyst component ("component embodiment"). The description as presented there, including all the preferred embodiments, however, also applies with respect to the present aspect of the present invention.

Suitable Al compounds to be employed in accordance with the present invention are in particular compounds of the general formula $AlR_{3-n}X_n$ wherein R stands for a straight chain or branched alkyl group having 1 to 20, preferably 1 to 10 and more preferably 1 to 6 carbon atoms, X stands for halogen and n stand for 0, 1, 2 or 3, preferably 0, 1 or 2 is added and brought into contact with the droplets of the dispersed phase of the agitated emulsion before recovering the solidified particles in step e). Tri-$(C_1$-$C_6)$-alkyl aluminium compounds and chlorinated aluminium alkyl compounds, especially diethyl aluminium chloride, are preferred.

The aluminium alkyl compound to be added in accordance with the present aspect of the present invention typically is added in such an amount that the final aluminium content of the component particles is from 0.05 to 1%, preferably 0.1 to 0.8% and most preferably 0.2 to 0.7% by weight of the final catalyst component particles. The most preferred aluminium content may vary depending on the type of the aluminium compound used and the adding step. In some cases, the most preferred amount may be, for example, from 0.1 to 0.4 wt%.

The catalysts known so far show often their highest polymerisation activities (activity maximum) at temperatures of about 60 to 70 °C. If the polymerisation is carried out at a higher temperature, i.e. above 70 °C, e.g. at around 80 °C or higher, as it is e.g. desirable in some specific processes, the activity of the catalyst is not high enough, because the activity maximum of normal catalyst is at lower temperature. The catalyst activity is in some cases at 80°C about half the activity found at 70°C. The catalysts and catalyst components in accordance with the present aspect of the invention, however, display an increase of polymerisation activity at 80°C, compared to the activity at 70°C, as further illustrated in the examples.

With respect to further information concerning the method as defined in this aspect of the invention, in particular concerning the Group 2 metal and electron donor and reaction conditions, reference is made to the following description of the process for preparing a catalyst component ("component embodiment"). The embodiments described there, including all preferred embodiments, also apply with respect to the present aspect of the present invention.

**Process for preparing an olefin polymerisation catalyst component ("component embodiment")**

The present invention furthermore provides a process for preparing an olefin polymerisation catalyst component as defined in claim 6. This process comprises the steps of:

a) preparing a solution of a complex of a group 2 metal and an electron donor by reacting a compound of said metal with said electron donor or a precursor thereof in an organic liquid reaction medium;

b) adding said solution of said complex to at least one titanium compound to produce an emulsion the dispersed phase of which contains more than 50 mol% of the group 2 metal in said complex;

c) agitating the emulsion in order to maintain the droplets of said dispersed phase within such an average size range of 5 to 200 µm;

d) solidifying said droplets of the dispersed phase;

e) recovering the solidified particles of the olefin polymerisation catalyst component;

wherein an aluminium alkoxy compound or a magnesium compound is added to and brought into contact with the droplets of the dispersed phase of the agitated emulsion before recovering the solidified particles in step e).

The Group 2 metal used in step a of the inventive process is preferably magnesium, and the liquid organic medium comprises preferably a $C_6$-$C_{10}$ aromatic hydrocarbon, preferably toluene.

As electron donor compound to be reacted with the Group 2 metal compound is preferably an mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable dioctyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The titanium compound may be selected among suitable and well-known titanium compounds, but it is preferably a titanium halide, and in particular $TiCl_4$.

In a further embodiment of the invention, the titanium compound used in the process can also contain organic ligands typically used in the field known as a single site catalyst.

The complex of the Group 2 metal is preferably a magnesium complex. The invention will henceforth be described in relation to a preferred embodiment of the process, namely to a process for the preparation of a Ziegler-Natta type catalyst.

As identified above, the process for preparing an olefin polymerisation catalyst component is in particular characterized in that an aluminium alkoxy compound or a magnesium compound is added to and brought into contact with the droplets of the dispersed phase of the agitated emulsion before recovering the solidifies particles in step e).

Suitable aluminium alkoxy compounds and magnesium compounds are defined in the following.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the tradename BOMAG), which is already preferably used in the preparation of the Mg complex.

Suitable aluminium alkoxy compounds can be selected from compounds of the general formula $AlR_{3-n}X_n$ wherein R stands for a straight chain or branched alkoxy group having 1 to 20, preferably 1 to 10 and more preferably 1 to 6 carbon atoms, X independently represents a residue selected from the group of halogen and alkyl and n stand for 0, 1 or 2, in particular 1 or 2. The aluminium compounds to be employed in accordance with the present invention are characterized in that they comprise at least one alkoxy residue (R) as defined above, which is preferably a straight chain alkoxy group having from 1 to 6 carbon atoms, most preferably ethoxide. The aluminium compound preferably comprises one or more alkoxy residues, most preferably one alkoxy residue.

In addition, the aluminium compound to be employed may comprise further residues, which independently can be selected from halogens and alkyl groups, preferably straight chain or branched alkyl groups having 1 to 20, preferably 1 to 10 and more preferably 1 to 6 carbon atoms. Preferably, the aluminium compound to be employed in accordance with the present invention comprises one or two of such further residues (X), which may be identical or dissimilar, more preferably the aluminium compound to be employed in accordance with the present invention comprises two residues X, which preferably are identical. Suitable examples of groups represented by the residue X are halogens, in particular chlorine, bromine or iodine, or alkyl residues, preferably alkyl groups having from 1 to 6 carbon atoms and being straight chain alkyl groups, such as methyl, ethyl, propyl, butyl, pentyl or hexyl, preferably methyl, ethyl, propyl and/or butyl. In particular, preferably the aluminium compound to be employed in accordance with the present invention comprises as residue X one or two ethyl groups, most preferably two ethyl group.

Illustrative examples of aluminium compounds to be employed in accordance with the present invention are diethyl aluminium ethoxide, ethyl aluminium diethoxide, diethyl aluminium methoxide, diethyl aluminium propoxide, diethyl aluminium butoxide, dichloro aluminium ethoxide, chloro aluminium diethoxide, dimethyl aluminium ethoxide, of which in particular diethyl aluminium ethoxide is preferred.

The aluminium alkoxy compound as exemplified and described above preferably is added in such an amount that the final aluminium content of the particles is from 0.0 to 0.7%, preferably 0.02 to 0.5% and most preferably 0.04 to 0.3% by weight of the final catalyst component particles. The most preferred aluminium content may vary depending on the type of the aluminium compound and on the adding step. In some cases, for example, the most preferred amount can be 0.01 to 0.2 wt%. The aluminium alkoxy compound to be employed in accordance with the present embodiment of the present invention is added during the synthesis of the catalyst component in an amount of aluminium from 0.01 to 0.25 mol/mol of added metal of Group 2 in the form of Group 2 metal compound, more preferably 0.02 to 0.1 mol/mol of Group 2 metal in the form of Group 2 metal compound, most preferably 0.03 to 0.08 mol/mol of added Group 2 metal in the form of Group 2 metal compound.

In this connection, the inventors surprisingly have found that the amount of the final aluminium content in the catalyst component is very small compared to the amount of aluminium added during the catalyst component preparation. In addition, it has been found that the amount of added aluminium compound needs not to be very high. Without being bound to this theory, it is believed that this is mainly due to the type of aluminium compound used in this aspect of the present invention. Aluminium originating from aluminium alkoxy compounds apparently is removed more easily from catalyst component than aluminium compounds originating from other types of aluminium compounds, such as aluminium alkyl compounds. However, they have the ability to increase the catalyst activity very effectively.

The magnesium compound to be added in accordance with the present invention is added in corresponding amounts.

The catalyst component particles prepared in accordance with the present aspect of the present invention preferably comprise 6 wt% or less of titanium, more preferably less than 5.5 wt%, and in embodiments even 4.5 wt% or less. The Group 2 metal, preferably magnesium, preferably is contained in the catalyst component particles in accordance with the present aspect of the present invention in an amount of 10 wt% or more, preferably 12 wt% or more, and in embodiments from 12 to 16 wt%, preferably from 12.5 to 15.5 wt%.

In accordance with the present aspect of the present invention, catalyst component particles are obtained which comprise titanium in the oxidation state of +4 in amount of less than 80%, preferably less than 70 %, more preferably less than 60 % based on the total titanium content. In embodiments, the amount of titanium in the oxidation state +4 may be even 45% or less, and in some embodiments even 40% or less.

According to the results obtained by the inventors there seem to be three variables, which effect on the results, namely;

- the adding step of reducing agent
- the amount of reducing agent
- the type of reducing agent.

According to the findings of the inventors it appears to be decisive to add the reducing agent before the particle formation has been completed so that the reducing agent might serve as a kind of particle-internal cocatalyst. Accordingly, the addition of the reducing agent may be started from step b) until the completion of the particle formation. The completion of the particle formation is usually achieved when the remaining toluene-soluble components have been washed out from the catalyst component particles during solidifying said particles. Thus, the reducing agent can be preferably added, in pure form or in the form of a solution, from shortly before the beginning of the emulsion formation until adding it to the washing liquid, mostly toluene.

In a preferred embodiment, the present invention is directed to a process for producing catalyst components of the Ziegler-Natta type in the form of particles having a predetermined size range, said process comprising: preparing a solution of magnesium complex by reacting an alkoxy magnesium compound and an electron donor or precursor thereof in a $C_6$-$C_{10}$ aromatic liquid reaction medium; reacting said magnesium complex with a fourvalent titanium compound at a temperature greater than 10°C and less than 60°C to produce an emulsion of a denser, titanium compound/toluene-insoluble, oil dispersed phase having, titanium compound/Mg mol ratio 0.1 to 10 in an oil disperse phase having titanium compound/Mg mol ratio 10 to 100; agitating the emulsion, optionally in the presence of an emulsion stabilizer and or a turbulence minimizing agent, in order to maintain the droplets of said dispersed phase within an average size range of 5 to 200 $\mu$m. The catalyst component particles are obtained after solidifying said particles of the dispersed phase by heating.

The said disperse and dispersed phases are thus distinguishable from one another by the fact that the denser oil, if contacted with a solution of titanium tetrachloride in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the titanium compound is present in the dispersed phase, as revealed by comparison of the respective titanium compound/Mg mol ratios.

In effect, therefore, virtually the entirety of the reaction product of the Mg complex with the titanium compound - which is the precursor of the ultimate catalyst component - becomes the dispersed phase, and proceeds through the further processing steps to the final dry particulate form. The disperse phase, still containing a useful quantity of titanium compound, can be reprocessed for recovery of that metal.

The production of a two-phase, rather than single-phase (as in prior practice) reaction product is encouraged by carrying out the Mg complex/titanium compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerisation. This morphology is preserved during the heating to solidify the particles, and of course throughout the final washing and drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, a particularly favoured ester being dioctyl phthalate. The donor may conveniently be formed in situ by reaction of an aromatic carboxylic acid chloride precursor with a $C_2$-$C_{16}$ alkanol and/or diol. The liquid reaction medium preferably comprises toluene.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$ acrylates such as poly(hexadecyl)-methacrylate and poly(octadecyl)-methacrylate.

Furthermore, improved results can be obtained if a turbulence minimizing agent (TMA) is added to the reaction mixture. By using said TMA, catalyst component particles can be obtained, said particles having very narrow size distribution.

Reaction mixture here means the solution from the initial organic liquid reaction medium, over the solution of the complex up to the emulsion before solidifying the particles of the dispersed phase of the emulsion. Preferably, the TMA is added to the reaction mixture when the emulsion is formed. Experiments of the inventors have shown that the TMA has to be added to the reaction mixture in any case before solidification of the droplets of the dispersed phase starts in order to make sure that a quite uniform particle size distribution can be obtained.

Said TMA agent has to be inert under the reaction conditions and soluble in the reaction mixture under the reaction conditions, which means that preferably polymers without polar groups are preferred.

Especially preferred are polymers of $\alpha$-olefin monomers with 6 to 20 carbon atoms selected from the group consisting of inert poly($C_6$-$C_{20}$)-olefines or mixtures thereof, and more preferably from polyoctene, polynonene, polydecene, polyundecene or polydodecene or mixtures thereof, most preferable is polydecene.

Usually, said turbulence minimizing agent can be added in any process step before particle formation starts, i.e. in any step before solidification of the emulsion and is added to the emulsion in an amount of 1 to 1.000 ppm, preferably 5 to 100 ppm and more preferable 5 to 50 ppm, based on the total weight of the reaction mixture.

It has been found that the best results are obtained when the titanium/Mg mol ratio of the denser oil is 1 to 5, preferably 2 to 4, and that of the disperse phase oil is 55 to 65. Generally the ratio of the mol ratio titanium/Mg in the disperse phase oil to that in the denser oil is at least 10.

Solidification of the dispersed phase droplets by heating is suitably carried out at a temperature of 70-150°C, usually at 90-110°C. Preparation of the magnesium complex may be carried out over a wide range of temperatures, 20 to 80°C being preferred, 50 to 70°C most preferred.

The finally obtained catalyst component is desirably in the form of particles having generally an average size range of 5 to 200 $\mu$m, preferably 10 to 100, more preferably 20 to 50 $\mu$m.

The present invention further comprehends an olefin polymerisation catalyst comprising a catalyst component prepared as aforesaid, in association with an alkyl aluminium cocatalyst and optionally donors, and the use of that polymerisation catalyst for the polymerisation Of $C_2$ to $C_{10}$-olefins.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the titanium compound. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the titanium compound at a lower temperature, contrary to previous practice, to bring about the formation of a two-phase, oil-in-oil, product.

Use of an aromatic medium for preparation of the Mg complex contributes to consistent product morphology and higher bulk density. Catalyst bulk density and morphology correlate with product bulk density and morphology the so-called "replication effect".

The technique adopted in the novel regimen of the invention is inherently more precise than that formerly employed, and thus further contributes to product consistency, as well as sharply reducing the volumes of solvent to be handled and thus improving process economics.

The reaction medium used as solvent can be aromatic or a mixture of aromatic and aliphatic hydrocarbons, the latter one containing preferably 5 - 9 carbon atoms, more preferably 5 - 7 carbon atoms, or mixtures thereof. Preferably, the liquid reaction medium used as solvent in the reaction is aromatic and is more preferably selected from hydrocarbons such as substituted and unsubstituted benzenes, preferably from alkylated benzenes, even more preferably from toluene and the xylenes, and is most preferably toluene. The molar ratio of said aromatic medium to magnesium is preferably less than 10, for instance from 4 to 10, preferably from 5 to 9. Said aliphatic hydrocarbons can be added to the reaction mixture separately and are preferably added after the reaction of Mg complex with the $TiCl_4$.

The recovered particulate product is washed at least once, preferably at least twice, most preferably at least three times with a hydrocarbon, which preferably is selected from aromatic and aliphatic hydrocarbons, preferably with toluene, particularly with hot (e.g. 90°C) toluene, which might include a small amount, preferably a few vol%, such as about 5 vol% of $TiCl_4$ in it. The amount of $TiCl_4$ can vary from a few vol% to more than 50 vol%, such as 5 vol% to 50 vol%, preferably up to 30 vol% and more preferably from 5 to 15 vol%. It is also possible that at least one wash is carried out with 100 vol% $TiCl_4$. One or several washes after aromatic and/or $TiCl_4$ washes can be run with aliphatic hydrocarbons of 4 to 8 carbon atoms. A further wash is advantageously performed with heptane and/or pentane, most preferably with hot (e.g. 90°C) heptane, and yet a further wash with pentane. A washing step typically includes several substeps. A favoured washing sequence is, for example, one washes with hot toluene (at 90°C), and with hot heptane (at 90°C) and one or two washes with pentane at room temperature. It is also possible that all washings will be done with the same solvent, e.g. toluene.

According to the one preferred embodiment of the present invention the aluminium alkoxy compound to be used in the catalyst component preparation of the invention can be added to any of the washing mediums, however preferably not to the last or two last washings.

The washing can be optimized to give a catalyst component with novel and desirable properties. Finally, the washed catalyst component is recovered. It can further be dried, as by evaporation or flushing with nitrogen, or it can be slurried to an oily liquid without any drying step.

It is preferable that the intermediates as well as the final product of the process be distinct compounds with an essentially stoichiometric composition. Often, they are complexes. A complex is, according to Römpps Chemie-Lexicon, 7. Edition, Franckh'sche Verlagshandlung, W. Keller & Co., Stuttgart, 1973, page 1831, "a derived name of compounds of higher order, which originate from the combination of *molecules,* - unlike compounds of first order, in the creation of which atoms participate".

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a magnesium dihalide such as magnesium dichloride or a dialkyl magnesium of the formula $R_2Mg$, wherein each one of the two Rs is a similar or different $C_1$-$C_{20}$ alkyl, preferably a similar or different $C_4$-$C_{10}$ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium, alkyl magnesium alkoxide or magnesium dihalide can react with a monohydric alcohol R'OH, or a mixture thereof with a polyhydric alcohol R'(OH)m.

Typical $C_1$-$C_{20}$ monohydric alcohols are methanol, ethanol, n-propanol, iso-propanol, n-butanol, iso-butanol, sec.butanol, tert.butanol, n-amyl alcohol, iso-amyl alcohol, sec.amyl alcohol, tert.amyl alcohol, diethyl carbinol, akt. amyl alcohol, sec. isoamyl alcohol, tert.butyl carbinol. Typical $C_6$-$C_{10}$ monohydric alcohols are hexanol, 2-ethyl-lbutanol, 4-methyl-2-pentanol, 1-heptanol, 2-heptanol, 4-heptanol, 2,4-dimethyl-3pentanol, 1-octanol, 2-octanol, 2-ethyl-1-hexanol, 1-nonanol, 5-nonanol, dilsobutyl carbinol, 1-decanol and 2,7-dimethyl-2-octanol. Typical >$C_{10}$ monohydric alcohols are n-1-undecanol, n-1-dodecanol, n-1-tridecanol, n-1-tetradecanol, n-1-pentadecanol,1-hexadecanol, n-1-heptadecanol and n- 1 octadecanol. The monohydric alcohols may be unsaturated, as long as they do not act as catalyst poisons.

Preferable monohydric alcohols are those of formula R'OH in which R' is a $C_2$-$C_{16}$ alkyl group, most preferably a $C_4$-$C_{12}$ alkyl group, particularly 2-ethyl-1-hexanol.

The aromatic reaction medium may also contain a polyalcohol, which may be straight- or branched-chain. Typical $C_2$ to $C_6$ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentareythritol. The polyhydric alcohol can be selected on the basis of the activity and morphology it, gives the catalyst component.

Preferably, essentially all of the aromatic carboxylic acid ester is a reaction product of a carboxylic acid halide, preferably a dicarboxylic acid dihalide, more preferably an unsaturated $\alpha,\beta$-dicarboxylic acid dihalide, most preferably phthalic acid dichloride, with the monohydric alcohol.

The titanium compound is preferably fourvalent and contains a halogen is preferably a titanium tetrahalide. Equivalent to titanium tetrahalide is the combination of an alkoxy titanium halide and a halogenation agent therefore, which are able to form a titanium tetrahalide *in situ*. The most preferred halide is the chloride.

The reaction conditions used in the claimed process may be varied according to the used reactants and agents.

As is known, the addition of at least one halogenated hydrocarbon during the process can lead to further improved catalytic activity. Reactive halogenated hydrocarbons preferably have the formula $R'''X'''_n$ wherein $R'''$ is an n-valent $C_1$-$C_{20}$ hydrocarbyl group, particularly a $C_1$-$C_{10}$ paraffin, $X'''$ is a halogen and n is an integer from 1 to 4.

Such chlorinated hydrocarbons include monochloromethane, dichloromethane, trichloromethane (chloroform), tetrachloromethane, monochloroethane, (1,1)-dichloroethane, (1,2)-dichloroethane, (1,1,1)-trichloroethane, (1,1,2)-trichloroethane, (1,1,1,2)-tetrachloroethane, (1,1,2,2) tetrachloroethane, pentachloroethane, hexachloroethane, (1)-chloropropane, (2)-chloropropane, (1,2)-dichloropropane, (1,3)-dichloropropane, (1,2,3)trichloropropane, (1)-chlorobutane, (2)-chlorobutane, isobutyl chloride, tert.butyl chloride, (1,4)-dichlorobutane, (1)-chloropentane, (1,5)-dichloropentane. The chlorinated hydrocarbons may also be unsaturated, provided that the unsaturation does not act as catalyst poison in the final catalyst component.

In the above formula, $R''$ is preferably a mono-or bivalent $C_1$-$C_{10}$ alkyl group, independently, $X'''$ is preferably chlorine and, independently, n is preferably 1 or 2. Preferred compounds include butyl chloride (BuCl), dichloroalkanes such as (1,4)-dichlorobutane, and tertiary butyl chloride.

Though the catalyst component preparation according to the inventive method can be carried out batchwise, it is also preferable and possible to prepare the catalyst component semi-continuously our continuously. In such semi-continuous or continuous process, the solution of the complex of the group 2 metal and said electron donor, which is prepared by reacting the compound of said metal with said electron donor in an organic liquid reaction medium, is mixed with at least one titanium compound, which might be dissolved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerisation catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerisation reactor, so that a continuous preparation and fed to the reactor is guaranteed. It is also possible to mix the solidified and washed catalyst component with an oily fluidic liquid and store and use the catalyst component as a catalyst component oil slurry. In this way, the drying steps can be avoided, which might be sometimes detrimental to the catalyst components morphology. This oil slurry method is described in general in EP 1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to fed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

The catalysts of the invention are used in polymerization of propylene optionally with comonomers selected from ethylene and/or other alpha-olefins of 4 to 10 carbon atoms. All generally known polymerization processes including solution, slurry and gas phase polymerization or any combinations thereof for producing polymer compositions can be used.

Slurry polymerisation is preferably a bulk polymerization, where monomer is used as a reaction medium.

Polymerisation can be carried out in a single or a multistage polymerisation process. Preferably polymerization is carried out in a multistage process using one or more polymerisation reactors, which may be the same or different, e.g. slurry and/or gas phase reactors or any combinations thereof. Each stage may be effected in parallel or sequentially using same or different polymerisation method. In case of a sequential stages each components may be produced in any order by carrying out the polymerisation in each step, except the first step, in the presence of the polymer component formed in the preceding step(s).

In a preferred process at least one component is produced by slurry process, preferably in bulk reactor. Bulk reactor is preferably a loop reactor. In one preferred multistage process a combination of at least one slurry reactor and at least one gas phase reactor is used. Additional gas phase reactors are possible.

A preferred multistage process is a "loop-gas phase"-process, such as developed by Borealis (known as BORSTAR® technology) described e.g. in patent literature, such as in EP 0887 379.

Optionally, the process can further comprise a prepolymerisation step before the actual polymerization step.

A continuous polymerisation process is preferred.

Preferably, the process is a multi(two)stage process as defined above, wherein the slurry polymerization is preferably carried out under the following conditions in a loop reactor:

- the temperature is within the range of 60°C and 110°C, preferably in the range of 70-90 °C, and in some special cases at 80 °C or above.
- the pressure is within the range of 20 bar to 80 bar, preferably between 30 bar to 60 bar,
- hydrogen can be added for controlling the molar mass in a manner known per se;

The reaction mixture from the slurry (bulk) reactor is transferred to the gas phase reactor, such as a fluidised bed reactor, where the conditions are preferably as follows:

- the temperature is within the range of 60°C to 130°C, preferably between 70°C and 100°C, and in some special cases at 80 °C or above.
- the pressure is within the range of 5 bar to 50 bar, preferably between 15 bar to 35 bar,
- hydrogen can be added for controlling the molar mass in a manner known per se.

The residence time can vary being e.g. in loop is in the range 0.5 to 5 hours, and in gas phase reactor 1 to 8 hours.

If desired, in slurry step supercritical conditions can be used.

The gas phase polymerisation may be conducted in a manner known in the art, such as in a fluidised bed or in an agitated bed. Also fast fluidisation may be utilised.

A catalyst system used in the polymerization can comprise in addition to the catalyst component of the present invention any well known external donors, such as silane based external donors, and cocatalysts, such as aluminium alkyl cocatalysts.

Some preferred embodiments of the invention are described, by way of illustration, in the following Examples.

In the examples, the following measuring methods were used:

Melt Flow Rate, MFR: ISO 1133; 230 °C, 2,16 kg load Xylene solubles, XS: Xylene soluble fraction of product at 25°C

DETERMINATION OF XYLENE SOLUBLE FRACTION (XS)

2.0 g of polymer are dissolved in 250 ml p-xylene at 135 °C under agitation. After $30\pm2$ minutes the solution is allowed to cool for 15 minutes at ambient temperature and then allowed to settle for 30 minutes at $25\pm0.5$ °C. The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$$m_0 = \text{initial polymer amount (g)}$$

$$m_1 = \text{weight of residue (g)}$$

$$v_0 = \text{initial volume (ml)}$$

## $v_1$ volume of analysed sample (ml)

Mw means weight average molecular weight and Mn is the number average molelecular weight determined in a known manner using size exclusion chromatograpy (SEC).

MWD means Mw/Mn, and is determined by said SEC method.

Rheology: Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity ($\eta$*) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad and \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

Shear thinning indexes (SHI), which are correlating with MWD and are independent of MW, were calculated according to Heino [1,2] (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995.

Preparation of the soluble Mg-complex

A magnesium complex solution was prepared by adding, with stirring, 55.8 kg of a 20 % solution in toluene of BOMAG A to 19.4 kg 2-ethylhexanol in a 150 1 steel reactor. During the addition the reactor contents were maintained below 20°C. The temperature of the reaction mixture was then raised to 60 °C and held at that level for 30 minutes with stirring, at which time reaction was complete. 5.5 kg 1,2-phthaloyl dichloride was then added and stirring of the reaction mixture at 60 °C was continued for another 30 minutes. After cooling to room temperature a yellow solution was obtained.

Preparation of the catalyst component (general procedure; if modified information given in the following Table 1)

19.5 ml titanium tetrachloride was placed in a 300 ml glass reactor equipped with a mechanical stirrer. Mixing speed was adjusted to 170 rpm. 32.0 g of the Mg-complex were then added to the stirred reaction mixture over a 10-minute period. During the addition of the Mg-complex the reactor contents were maintained below 30°C.

1.0 ml of a solution in toluene of 3.0 mg polydecene and 2.0 ml Viscoplex 1-254 were then added, and after 5 minutes stirring at room temperature 10.0 ml of n-heptane was added. Stirring was maintained at room temperature for 30 minutes. The temperature of the reaction mixture was then slowly raised to 90°C over a period of 20 minutes and held at that level for 30 minutes with stirring.

After settling and syphoning the solids underwent washing with 100 ml toluene/reducing agent at 90°C for 30 minutes, 60 ml heptane for 20 minutes at 90°C and 60 ml pentane for 10 minutes at 25°C. Finally, the solids were dried at 60 °C by nitrogen purge, to yield a yellow, air-sensitive powder.

Bulk polymerisation of propylene

The propylene bulk polymerisation was carried out in a stirred 5 1 tank reactor. About 0.9 ml triethyl aluminium (TEA) as a co-catalyst, ca 0.12 ml cyclohexyl methyl dimethoxy silane (CMMS) as an external donor and 30 ml n-pentane were mixed and allowed to react for 5 minutes. Half of the mixture was then added to the polymerisation reactor and the other half was mixed with about 20 mg of a catalyst. After additional 5 minutes the catalyst/TEA/donor/n-pentane mixture was added to the reactor. The Al/Ti mole ratio was 250 mol/mol and the Al/CMMS mole ratio was 10 mol/mol. 70 mmol hydrogen and 1400 g propylene were introduced into the reactor and the temperature was raised within ca 15 minutes to the polymerisation temperature (70 or 80°C, see also table 2). The polymerisation time after reaching polymerisation temperature was 60 minutes, after which the polymer formed was taken out from the reactor. The examples as illustrated above clearly show that, in accordance with the present invention, it is possible to increase the polymerisation activity at higher temperatures by adjusting the amount of titanium present in the catalyst component being in the oxidation state + 4. The example as run with the catalyst T5 illustrates that no increase in activity can be achieved by merely adding a reducing agent in the absence of the titanium compound, since then the reducing agent will not act in the way as desired and envisaged by the present invention.

Table **1**

| Catalyst | Reducing agent | | | Chem. composition of the catalyst | | | | |
|---|---|---|---|---|---|---|---|---|
| | Typ | Amount [ml] | Comment | Ti [wt%] | $Ti^4/Ti^3/Ti^2$ [%] | Al [wt%] | Mg [wt%] | DOP [wt%] |
| T1 | DEAC | 0,11 | Added **to** wash toluene | 3,63 | 63 / 32 / 5 | 0,27 | 12,26 | 26,2 |
| T2 | DEAC | 0,11 | Added to wash toluene | 3,88 | 76 / 20 / 4 | 0,22 | 12,63 | 24,0 |
| | | | | | | | | |
| T3 | TEA | 0,1 | Added to TiCl4 | 3,55 | 81 /19 / 0 | 0,15 | 12,95 | 25,5 |
| T4 | TEA | 0,3 | Added to TiCl4 | 4,77 | 55 / 42 / 3 | 0,37 | 12,27 | 25,7 |
| | | | | | | | | |
| T5 | TEA | 0,1 | Added to Mg complex | 3,04 | 99 / 1 / 0 | n. a. | 12,68 | 27,3 |
| | | | | | | | | |
| T6 | TEA | 0,1 | Toluene wash / solidification T = 105 C | 3,99 | 31 / 65 / 4 | 0,11 | 13,36 | 23,1 |
| T7 | TEA | 0,1 | Toluene wash / washing T = 105 C | 4,27 | 37 / 60 / 3 | 0,06 | 13,36 | 26,6 |
| | | | | | | | | |
| T8 | DEAC | 2x0,11 | Added to 2-phase and toluene wash | 3,89 | 65 / 29 / 5 | 0,21 | 12,42 | 27,9 |
| T9 | TEA/DEAC | 2x0,1 | 2 toluene washes | 4,86 | 22 / 72 / 6 | 0,22 | 12,60 | 24,4 |

(continued)

| Catalyst | Reducing agent | | | Chem. composition of the catalyst | | | | |
| | Typ | Amount [ml] | Comment | Ti [wt%] | $Ti^4/Ti^3/Ti^2$ [%] | Al [wt%] | Mg [wt%] | DOP [wt%] |
|---|---|---|---|---|---|---|---|---|
| T10 | EASC | 0,1 | Added to toluene wash | 3,90 | 68 / 27 / 5 | 0,29 | 12,70 | 26,0 |
| T11 | EADC | 0,1 | Added to toluene wash | 3,14 | 96 / 3,5 / 0,3 | 0,26 | 12,30 | 25,5 |
| | | | | | | | | |
| T12 | TiCl4 | 30 ml | 30 ml TiCl4 wash | 3,76 | 100 / 0 / 0 | n. a. | 13,00 | 23,9 |
| T13 | DEAC/TiCl4 | 0,11 /30 | Toluene+DEAC wash, TiCl4 wash | 2,83 | 84 / 13 / 3 | 0,07 | 14,36 | 18,3 |
| T14 | DEAC/TiCl4 | 0,22/30 | Toluene+DEAC wash, TiCl4 wash | 4,58 | 40 / 50 / 10 | 0,14 | 13,14 | 18,6 |
| T15 | TiCl4/DEAC | 30/0,11 | TiCl4 wash, followed by DEAC+toluene | 4,35 | 70 / 25 / 5 | 0,24 | 13,05 | 23,2 |
| | | | | | | | | |
| T16 | BOMAG | 1 ml (20%) | Toluene+BOMAG wash | 4,25 | 72 / 27 / 1 | - | 12,53 | 25,3 |
| T17 | BOMAG | 3 ml (20%) | Toluene+BOMAG wash | 5,32 | 41 / 49 / 10 | - | 11,56 | 21,9 |

TEA: triethyl aluminium
TMA: trimethyl aluminium
TiBA: tri iso-butyl aluminium
DOP: dioctyl phthalate
DEAC: diethyl aluminium chloride
EASC: ethyl aluminium sesquichloride
EADC: ethyl aluminium dichloride

Table 1

| | | | | Catalyst activity and polymer properties | | | | | |
| | | Reducing agent | | Polymer. temp. = 70°C | | | Polymer. temp. = 80°C | | |
| Catalyst | Ti3+ [%] | Compound | Amount [ml] | Activity [kg PP/g cat] | MFR[1] [g/10 min] | XS[2] [wt%] | Activity $(a_{80}/a_{70})$ [kg PP/g cat] | MFR[1] [g/10 min] | XS[2] [wt%] |
|---|---|---|---|---|---|---|---|---|---|
| T1 | 32 | DEAC | 0,11 | 38,9 | 3,45 | 1,6 | 45,8 (118%) | 5,60 | 1,1 |
| T2 | 20 | DEAC | 0,11 | 38,4 | 3,30 | 1,3 | 44,8 (117%) | 5,30 | 1,2 |
| | | | | | | | | | |
| T3 | 19 | TEA | 0,1 | 37,6 | 2,80 | 1,4 | 36,2 (96%) | 4,50 | 1,1 |
| T4 | 42 | TEA | 0,3 | 25,3 | 4,90 | 3,4 | 32,1 (127%) | 7,60 | 2,4 |
| | | | | | | | | | |
| T5 | 1 | TEA | 0,1 | 29,3 | 2,70 | 1,1 | 26,7 (91%) | 4,40 | 1,1 |

(continued)

| Catalyst | Ti3+ [%] | Reducing agent | | Catalyst activity and polymer properties | | | | | |
| | | | | Polymer. temp. = 70°C | | | Polymer. temp. = 80°C | | |
| | | Compound | Amount [ml] | Activity [kg PP/g cat] | MFR[1] [g/10 min] | XS[2] [wt%] | Activity ($a_{80}/a_{70}$) [kg PP/g cat] | MFR[1] [g/10 min] | XS[2] [wt%] |
|---|---|---|---|---|---|---|---|---|---|
| T6 | 65 | TEA | 0,1 | 21,1 | 6,40 | 3,3 | 27,6 (131%) | 8,60 | 2,2 |
| T7 | 60 | TEA | 0,1 | 20,8 | 6,00 | 2,4 | 28,6 (137%) | 8,10 | 1,7 |
| T8 | 29 | DEAC | 2x0,11 | 31,8 | 3,70 | 3,7 | 37,2 (117%) | 5,70 | 1,2 |
| T9 | 72 | TEA/DEAC | 2x0,1 | 31,2 | 6,20 | 3,0 | 45,5 (146%) | 7,9 | 2,0 |
| T10 | 27 | EASC | 0,1 | 35,1 | | | 41,8 (119%) | 6,2 | 1,2 |
| T11 | 4 | EADC | 0,1 | 36,7 | 2,90 | 1,3 | 33,7 (92%) | | |
| T12 | - | TiCl4 | 30 ml | 40,6 | 3,7 | 2,0 | --- | --- | --- |
| T13 | 13 | DEAC/TiCl4 | 0,11/30 | 45,1 | 5,6 | 2,1 | 40,2 (90%) | 6,7 | 2,0 |
| T14 | 50 | DEAC/TiCl4 | 0,22/30 | 34,7 | 5,2 | 3,3 | 46,1 (133%) | 7,8 | 2,4 |
| T15 | 26 | TiCl4/DEAC | 30/0,11 | 40,8 | 5,0 | 2,2 | 48,4 (119%) | 6,4 | 1,6 |
| T16 | 28 | BOMAG | 1 ml (20%) | 36,5 | 3,5 | 1,5 | 40,2 (110%) | 5,5 | 1,1 |
| T17 | 49 | BOMAG | 3 ml (20%) | 24,2 | 6,0 | 2,9 | 34,4 (142%) | 9,2 | 2,0 |

The following examples illustrate the suitability of aluminium alkoxy compounds.

Example 1A

Preparation of the soluble Mg-complex

A magnesium complex solution was prepared by adding, with stirring, 78.0 kg of a 20% solution in toluene of butyloctylmagnesium (BOMAG A) to 27.1 kg 2-ethylhexanol in a 150 1 steel reactor. During the addition the reactor contents were maintained below 35°C. After that 7.98 kg 1,2-phthaloyl dichloride was added and the reaction mixture was stirred for 60 minutes at 60°C. Solution was cooled to room temperature and stored.

Preparation of the catalyst component:

19.5 ml titanium tetrachloride was placed in a 300 ml glass reactor equipped with a mechanical stirrer. Mixing speed was adjusted to 170 rpm and 32.0 g of the Mg-complex was added to the stirred reaction mixture over a 10-minute period. During the addition of the Mg-complex reactor content was maintained below 30°C. After that 1.0 ml of a solution in toluene of 2.0 mg polydecene and 2.0 ml Viscoplex 1-254 and 10 ml of heptane was added. The temperature of the reaction mixture was then raised to 90°C over a period of 30 minutes and held at that level for 30 minutes with stirring.

After settling and siphoning, 100 ml of toluene containing <u>1.25 ml of diethyl aluminium ethoxide</u> (Dealox)(10 vol%) was added to the reactor. After 30 minutes mixing solids were settled and liquid was siphonated. Then the solids were washed with 60 ml heptane for 20 minutes at 90°C and with 60 ml pentane for 10 minutes at 25°C. Finally, the catalyst was dried at 60°C by nitrogen purge.

Ti, Mg, Al and DOP contents in the catalyst are disclosed in Table 1A.

Polymerisation

Polymerization of propylene at 80°C with the catalyst component was done in a 5 litre reactor with stirrer. Triethyl aluminium (TEA) (cocatalyst) (Al/Ti molar ratio 250), cyclohexyl methyl dimethoxy silane (external donor Do and Al/Do molar ratio 10) and 30 ml pentane were mixed and allowed to react for 5 minutes. Half of the mixture was added to the reactor and the other half was mixed with 19.4 mg of the catalyst component. After 10 minutes the catalyst/TEA/donor/pentane mixture was added to the reactor. 70 mmol hydrogen and 1400 g propylene were added into the reactor and the temperature was raised to 80°C within 20 minutes while mixing. The reaction was stopped after 60 minutes at 80°C by flashing out unreacted propylene with cooling. The results are shown in Table 2.

Polymerization of propylene at 70°C was carried out as at 80°C using 18.8 mg of the catalyst component. Activity at 70°C was 25,6 kg PP/g cat.

The results are shown in Tables 2A and 3A.

Example 2A

Magnesium complex was the same as in Example 1A.

Preparation of the catalyst component:

19.5 ml titanium tetrachloride was placed in a 300 ml glass reactor equipped with a mechanical stirrer. Mixing speed was adjusted to 170 rpm. 32.0 g of the Mg-complex was added to the stirred reaction mixture over a 10-minute period. During the addition of the Mg-complex the reactor content was maintained below 30°C. Then 1.0 ml of a solution in toluene of 3.0 mg polydecene and 2.0 ml Viscoplex 1-254 and 10 ml of heptane was added. The temperature of the reaction mixture was then slowly raised to 90°C over a period of 30 minutes and held at that level for 30 minutes with stirring.

After settling and siphoning, 100 ml of toluene containing <u>1.25 ml of diethyl aluminium ethoxide</u> (10 vol%) was added to the reactor. Then 30 ml of $TiCl_4$ was added keeping the temperature at 90°C.

Then the solids were washed with 60 ml heptane for 20 minutes at 90°C and with 60 ml pentane for 10 minutes at 25°C. Finally, the catalyst component was dried at 60°C by nitrogen purge.

Ti, Mg, Al and DOP contents in the catalyst are disclosed in Table 1A.

Polymerization of propylene at 80°C was carried out as in Example 1A using 15.3 mg of the catalyst component.

Catalyst composition and polymerization results are shown in Tables 1A, 2A and 3A.

Example 3A

Magnesium complex was the same as in Example 1A.

Preparation of the catalyst component was done as in Example 2, except Dealox amount was 1.5 ml.

Polymerization was carried out as in the Example 1A at 80°C using 13.4 mg of the catalyst component and at 70°C using 17.1 mg of the catalyst component. Activity at 70°C was 39,9 kg PP/g cat.

Catalyst composition and polymerization results are shown in Tables 1A, 2A and 3A.

Example 4A

Magnesium complex was the same as in Example 1A.

Preparation of the catalyst component was done as in Example 3A, except $TiCl_4$ wash was done at 100°C.

Polymerization was carried out at 80°C as in the Example 1A using 15.2 mg of the catalyst component.

Catalyst composition and polymerization results are shown in Tables 1A, 2A and 3A.

Example 5A

Magnesium complex was the same as in Example 1A.

Preparation of the catalyst component was done as in Example 3A, except TiCl$_4$ wash was done at 80°C.

Polymerization was carried out at 80°C as in the Example 1A using 15.0 mg of the catalyst component.

Catalyst composition and polymerization results are shown in Tables 1A, 2A and 3A.

Example 6A

Magnesium complex was the same as in Example 1A.

Preparation of the catalyst component was done as in Example 5A, except Dealox amount was 2.5 ml.

Polymerization was carried out at 80°C as in the Example 1 using 13.0 mg of the catalyst component.

Catalyst composition and polymerization results are shown in Tables 1A, 2A and 3A.

Example 7A

Magnesium complex was the same as in Example 1A.

Preparation of the catalyst component was done as in Example 5A, except that TiCl$_4$ was diluted with toluene in a ratio of 1:3 (1 part (7.5 ml) TiCl$_4$ and 3 parts (22.5 ml) toluene).

Polymerization was carried out at 80°C as in Example 1A using 14.0 mg of the catalyst component.

Catalyst composition and polymerization results are shown in Tables 1A, 2A and 3A.

Example 8A

Magnesium complex was the same as Example 1A.

Preparation of the catalyst component:

19.5 ml titanium tetrachloride was placed in a 300 ml glass reactor equipped with a mechanical stirrer. Mixing speed was adjusted to 170 rpm and 32.0 g of the Mg-complex was added to the stirred reaction mixture over a 10-minute period. During the addition of the Mg-complex the reactor content was maintained blow 30°C. Then 1.5 ml Dealox was added to the reaction mixture. After that 1.0 ml of a solution in toluene of 2.0 mg polydecene and 2.0 ml Viscoplex 1-254 and 10 ml of heptane was added. The temperature of the reaction mixture was then raised to 90°C over a period of 30 minutes and held at that level for 30 minutes with stirring.

After settling and siphoring, 30 ml of TiCl$_4$ was added keeping the temperature at 90°C. After 30 minutes mixing solids were settled and liquid was siphonated. Then the solids were washed with 100 ml toluene for 30 minutes at 90°C, with 60 ml heptane for 20 minutes at 90°C and with 60 ml pentane for 10 minutes at 25°C. Finally, the catalyst was dried at 60°C by nitrogen purge. Polymerization was carried out at 80°C as in Example 1A using 13.0 mg of the catalyst component.

Catalyst composition and polymerization results are shown in Tables 1A, 2A and 3A.

Table 1A : Catalyst component compositions

| Catalyst /example | Mg wt-% | Ti wt-% | DOP wt-% | Al wt-% |
|---|---|---|---|---|
| Example 1 | 12.5 | 3.9 | 25.9 | 0.09 |
| Example 2 | 14.2 | 3.7 | 18.4 | 0.1 |
| Example 3 | 13.3 | 4.0 | 19.3 | 0.0 |
| Example 4 | 14.0 | 3.9 | 17.6 | 0.07 |
| Example 5 | 14.3 | 4.3 | 16.7 | 0.07 |
| Example 6 | 12.5 | 5.2 | 11.8 | 0.04 |
| Example 7 | 15.1 | 3.6 | 23.5 | 0.11 |
| Example 8 | 13.1 | 3.6 | 23.0 | 0.16 |
| DOP = diethylhexylphtalate | | | | |

Table 1B: Amount of added Al and Al content in catalyst component

| Example | Al added/ mmol | Al in cat /mmol | Al in cat/Al added mmol/mmol |
|---|---|---|---|
| Example 1 | 0,83 | 0,14 | 0.17 |
| Example 2 | 0,83 | 0,16 | 0,19 |
| Example 3 | 1,0 | 0,0 | 0 |
| Example 4 | 1,0 | 0,10 | 0,10 |
| Example 5 | 1,0 | 0,10 | 0,10 |
| Example 6 | 1,0 | 0,08 | 0,08 |
| Example 7 | 1,0 | 0,18 | 0,18 |
| Example 8 | 1,0 | 0,28 | 0,28 |

Table 2A: Polymerization results

| example | Activity (80°C) / kgPP/g cat | MFR (80°C) | XS (80°C) |
|---|---|---|---|
| 1 | 34.7 | 10.2 | 1.4 |
| 2 | 51.3 | 7.3 | 2.0 |
| 3 | 50.9 | 8.2 | 2.5 |
| 4 | 46.8 | 8.2 | 2.5 |
| 5 | 50.5 | 7.7 | 2.2 |
| 6 | 45.2 | 7.0 | 1.7 |
| 7 | 44.5 | 7.4 | 1.6 |
| 8 | 39.4 | 6.8 | 2.2 |

Table 3A: Polymer properties for polymers of examples 2A, 3A, 5A and 6A (polymerization at 80 °C).

| Example | SHI (0/50) | Mw | Mn | Mwd |
|---|---|---|---|---|
| Example 2A | 5.1 | 274000 | 64600 | 4.2 |
| Example 3A | 5.6 | 274000 | 66100 | 4.1 |
| Example 5A | 5.8 | 274000 | 72200 | 3.8 |
| Example 6A | 5.9 | 266000 | 72300 | 3.7 |

These examples clearly show that the addition of a specific type of aluminium compound as defined in the present invention surprisingly leads to a very high activity with respect to polymerizations at higher temperatures, and still the Al content in the final catalyst component is very low or even zero.

The activity and the Al content in the final catalyst are to some extent also dependent on the stage, where the Al content is added. It can be seen that by adding the Al compound together with the washing medium, the activity will be higher.

Low Al content is shown by the Al wt-% content in the catalyst component as well by the ratio of the Al in catalyst(mmol)/Al added (mmol) to the catalyst component synthesis. As can be seen in the examples the ratio Al in cat/Al added is much lower in the catalyst components prepared according to the present invention. It shows that the Al alkoxy compounds used in the invention apparently are removed more easily from the catalyst component. As a result a catalyst component is obtained yielding a catalyst having a very high activity at high polymerisation temperatures and still a low amount of Al in the final catalyst.

In addition good polymerisation results are obtained without detrimental effect on the polymer produced.

**Claims**

1. Process for preparing an olefin polymerization catalyst component in the form of particles having a predetermined size range of 5 to 200 μm, said process comprising the steps of:

   a) preparing a solution of a complex of a group 2 metal and an electron donor by reacting a compound of said metal with said electron donor or a precursor thereof in an organic liquid reaction medium;
   b) adding said solution of said complex to at least one titanium compound to produce an emulsion the dispersed phase of which contains more than 50 mol% of the group 2 metal in said complex;
   c) agitating the emulsion in order to maintain the droplets of said dispersed phase within such an average size range of 5 to 200 μm;
   d) solidifying said droplets of the dispersed phase;
   e) recovering the solidified particles of the olefin polymerization catalyst component;

   wherein an aluminum alkoxy compound or a magnesium compound is added to and brought into contact with the droplets of the dispersed phase of the agitated emulsion before recovering the solidified particles in step e).

2. Process in accordance with claim 1, wherein a magnesium compound is added to **and** brought into contact with the droplets of the dispersed phase of the agitated emulsion before recovering the solidified particles in step e).

3. Process in accordance with claim 1 or 2, wherein the solidified particles of the olefin polymerisation catalyst component comprise 6 wt% or less of titanium and/or 10 wt% or more of a group 2 metal.

4. Process in accordance with any one of claims 1, 2 or 3, wherein the magnesium compound is an alkyl magnesium compound or halogenated alkyl magnesium compound of the general formula $MgR_{2-n}X_n$, where each n is 0 or 1, and each R are same or different alkyl groups with 1 to 8 carbon atoms and X is halogen, preferably Cl, preferably the magnesium compound is butyloctyl magnesium.

5. Process in accordance with any one of claims 1 to 4, wherein the solidified particles of the olefin polymerisation catalyst component comprise less than 80% of the total titanium content in the form of titanium in the oxidation state of +4, preferably less than 70%, more preferably less than 60%.

6. Solidified particles of an olefin polymerisation catalyst component, obtainable by any one of the processes as claimed in claims 6 to 10.

7. An olefin polymerisation catalyst comprising particles of the catalyst component obtainable according to the process of any of claims 6 to 10 and a co-catalyst, preferably an alkyl aluminum co-catalyst and optionally an external electron donor.

8. Use of a catalyst in accordance with claim 12 in a process for polymerising olefins, in particular $C_2$ to $C_{10}$ α-olefins, preferably propylene or ethylene or copolymers thereof with other α-olefins.

Europäisches
Patentamt

European
Patent Office

Office européen
des brevets

# EUROPEAN SEARCH REPORT

Application Number

EP 14 00 4083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 403 292 A (BOREALIS POLYMERS OY [FI]) 31 March 2004 (2004-03-31) * examples 1-9; tables 1,2 * | 1-8 | INV. C08F10/00 C08F4/651 C08F4/655 |
| X | US 4 294 948 A (TOYOTA AKINORI ET AL) 13 October 1981 (1981-10-13) * page 9 - page 18; examples 1,9-11,14; tables 4-6 * | 1-8 | |
| X | US 5 413 979 A (GUSTAFSSON BILL ET AL) 9 May 1995 (1995-05-09) * example 1 * | 1-8 | |
| X | EP 1 273 595 A (BOREALIS TECH OY) 8 January 2003 (2003-01-08) * examples 1-6 * | 1-8 | |
| X | EP 0 949 280 A1 (NOVA CHEM INT SA [CH]) 13 October 1999 (1999-10-13) * page 2, line 1 - line 10 * * example 1 * | 1-8 | TECHNICAL FIELDS SEARCHED (IPC) |
| X,D | WO 00/08074 A (BOREALIS AS ;GAROFF THOMAS (FI); LEINONEN TIMO (FI); ALA HUIKKU SI) 17 February 2000 (2000-02-17) * page 20, line 35 - page 22, line 36 * * examples 18,19 * | 1-8 | C08F |
| A | US 2 951 045 A (WALTER GAMBLE LEON ET AL) 30 August 1960 (1960-08-30) * the whole document * | 1-8 | |
| A | US 5 409 875 A (HSU CHENG C ET AL) 25 April 1995 (1995-04-25) * column 6; example 1 * | 1-8 | |

The present search report has been drawn up for all claims

| Place of search | Date of completion of the search | Examiner |
|---|---|---|
| The Hague | 5 February 2015 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 14 00 4083

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2015

| Patent document cited in search report | | | Publication date | Patent family member(s) | | | Publication date |
|---|---|---|---|---|---|---|---|
| EP 1403292 | A | | 31-03-2004 | AU | 2003276012 | A1 | 19-04-2004 |
| | | | | BR | 0314812 | A | 02-08-2005 |
| | | | | CN | 1701081 | A | 23-11-2005 |
| | | | | EP | 1403292 | A1 | 31-03-2004 |
| | | | | JP | 2006501325 | A | 12-01-2006 |
| | | | | PL | 209712 | B1 | 31-10-2011 |
| | | | | US | 2006166814 | A1 | 27-07-2006 |
| | | | | US | 2010113716 | A1 | 06-05-2010 |
| | | | | WO | 2004029112 | A1 | 08-04-2004 |
| US 4294948 | A | | 13-10-1981 | AT | 362579 | B | 25-05-1981 |
| | | | | AU | 517748 | B2 | 27-08-1981 |
| | | | | AU | 3376578 | A | 06-09-1979 |
| | | | | BE | 864592 | A1 | 06-09-1978 |
| | | | | BR | 7801318 | A | 10-10-1978 |
| | | | | CA | 1119155 | A1 | 02-03-1982 |
| | | | | DE | 2809318 | A1 | 07-09-1978 |
| | | | | ES | 467539 | A1 | 01-01-1979 |
| | | | | FR | 2382464 | A1 | 29-09-1978 |
| | | | | GB | 1577301 | A | 22-10-1980 |
| | | | | IT | 1094171 | B | 26-07-1985 |
| | | | | JP | S591407 | B2 | 12-01-1984 |
| | | | | JP | S53108088 | A | 20-09-1978 |
| | | | | NL | 7802408 | A | 06-09-1978 |
| | | | | NO | 780736 | A | 05-09-1978 |
| | | | | SE | 440082 | B | 15-07-1985 |
| | | | | US | 4294948 | A | 13-10-1981 |
| | | | | ZA | 7801023 | A | 28-02-1979 |
| US 5413979 | A | | 09-05-1995 | AT | 133689 | T | 15-02-1996 |
| | | | | CA | 2069001 | A1 | 21-05-1991 |
| | | | | DE | 69025195 | D1 | 14-03-1996 |
| | | | | DE | 69025195 | T2 | 30-05-1996 |
| | | | | EP | 0502009 | A1 | 09-09-1992 |
| | | | | ES | 2083468 | T3 | 16-04-1996 |
| | | | | FI | 895526 | A | 21-05-1991 |
| | | | | JP | 2897149 | B2 | 31-05-1999 |
| | | | | JP | H05504154 | A | 01-07-1993 |
| | | | | US | 5413979 | A | 09-05-1995 |
| | | | | WO | 9107443 | A1 | 30-05-1991 |
| EP 1273595 | A | | 08-01-2003 | AT | 328912 | T | 15-06-2006 |
| | | | | BR | 0210400 | A | 17-08-2004 |
| | | | | BR | 0210403 | A | 17-08-2004 |
| | | | | CA | 2447592 | A1 | 03-01-2003 |
| | | | | CA | 2447644 | A1 | 03-01-2003 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 14 00 4083

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2015

| Patent document cited in search report | | | Publication date | Patent family member(s) | | Publication date |
|---|---|---|---|---|---|---|
| | | | | CN | 1518563 A | 04-08-2004 |
| | | | | CN | 1518565 A | 04-08-2004 |
| | | | | CN | 1537118 A | 13-10-2004 |
| | | | | DE | 60120389 T2 | 14-06-2007 |
| | | | | EP | 1273595 A1 | 08-01-2003 |
| | | | | EP | 1397395 A2 | 17-03-2004 |
| | | | | EP | 1397401 A1 | 17-03-2004 |
| | | | | ES | 2266053 T3 | 01-03-2007 |
| | | | | HU | 0400335 A2 | 28-07-2004 |
| | | | | JP | 5300757 B2 | 25-09-2013 |
| | | | | JP | 2004530765 A | 07-10-2004 |
| | | | | JP | 2010132919 A | 17-06-2010 |
| | | | | KR | 20040007732 A | 24-01-2004 |
| | | | | KR | 20040007733 A | 24-01-2004 |
| | | | | PL | 366583 A1 | 07-02-2005 |
| | | | | PT | 1273595 E | 31-10-2006 |
| | | | | US | 2004235644 A1 | 25-11-2004 |
| | | | | US | 2004242406 A1 | 02-12-2004 |
| | | | | US | 2004242407 A1 | 02-12-2004 |
| | | | | WO | 03000754 A1 | 03-01-2003 |
| | | | | WO | 03000755 A2 | 03-01-2003 |
| | | | | WO | 03000757 A1 | 03-01-2003 |
| EP 0949280 | A1 | 13-10-1999 | | BR | 9901121 A | 11-04-2000 |
| | | | | CA | 2234188 A1 | 07-10-1999 |
| | | | | CN | 1235168 A | 17-11-1999 |
| | | | | DE | 69908477 D1 | 10-07-2003 |
| | | | | DE | 69908477 T2 | 13-05-2004 |
| | | | | EA | 199900265 A2 | 28-10-1999 |
| | | | | EP | 0949280 A1 | 13-10-1999 |
| WO 0008074 | A | 17-02-2000 | | AT | 284904 T | 15-01-2005 |
| | | | | AU | 5424299 A | 28-02-2000 |
| | | | | CN | 1315969 A | 03-10-2001 |
| | | | | DE | 69922669 D1 | 20-01-2005 |
| | | | | DE | 69922669 T2 | 08-12-2005 |
| | | | | EP | 1114072 A1 | 11-07-2001 |
| | | | | ES | 2235502 T3 | 01-07-2005 |
| | | | | FI | 981718 A | 08-02-2000 |
| | | | | JP | 2002522578 A | 23-07-2002 |
| | | | | TW | 500631 B | 01-09-2002 |
| | | | | WO | 0008074 A1 | 17-02-2000 |
| US 2951045 | A | 30-08-1960 | | NONE | | |
| US 5409875 | A | 25-04-1995 | | CA | 2132732 A1 | 15-09-1994 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.** EP 14 00 4083

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2015

| Patent document cited in search report | Publication date | Patent family member(s) | Publication date |
|---|---|---|---|
| | | US 5409875 A | 25-04-1995 |
| | | WO 9420545 A1 | 15-09-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0155230 A
- EP 713886 A
- EP 856013 A
- WO 0008073 A
- WO 0008074 A
- EP 926165 A
- EP 83074 A
- EP 83073 A
- WO 03000757 A
- WO 2004029112 A
- EP 1489110 A
- EP 0887379 A

**Non-patent literature cited in the description**

- *IUPAC, Nomenclature of Inorganic Chemistry,* 1989
- Römpps Chemie-Lexicon. Franckh'sche Verlagshandlung, W. Keller & Co, 1973, 1831
- **HEINO, E.L. ; LEHTINEN, A ; TANNER, J. ; SEPPÄLÄ, J. ; NESTE OY.** Rheological characterization of polyethylene fractions. *Theor. Appl. Rheol., Proc. Int. Congr. Rheol.,* 1992, vol. 1, 360-362
- **HEINO, EEVA-LEENA.** Borealis Polymers Oy
- *Annual Transactions of the Nordic Rheology Society,* 1995